# EUROPÄISCHE PATENTANMELDUNG

(11) **EP 0 927 739 A1**
(43) Veröffentlichungstag der Anmeldung: **07.07.1999**
(21) Anmeldenummer: 98123992.4
(22) Anmeldetag: 17.12.1998
(51) Int. Cl.: C08K 3/36

(54) **Verfahren zur Herstellung von Siliconpolymer-Feststoff-Mischungen für fliessfähige RTV2-Silicon-Massen mit niedriger Fliessgrenze**

(30) Priorität: 02.01.1998 DE 19800022
(71) Anmelder: Wacker-Chemie GmbH, 81737 München (DE)
(72) Erfinder: Schöley, Peter, 01665 Diera-Zehren (DE); Winkler, Ralf Dr. rer. nat., 01445 Radebeul (DE)

(57) **Zusammenfassung**

Die Erfindung betrifft ein Verfahren zur Herstellung von Siliconpolymer-Feststoff-Mischungen für fließfähige RTV2-Silicon-Massen mit niedriger Fließgrenze, wobei verdichtete Kieselsäure in Siliconpolymer eingearbeitet wird.

## Beschreibung

Die Erfindung betrifft ein Verfahren zu Herstellung von Siliconpolymer-Feststoff-Mischungen für fließfähige RTV2-Silicon-Massen mit niedriger Fließgrenze, wobei verdichtete Kieselsäure in Siliconpolymer eingearbeitet wird. Diese Massen haben im unvernetzten Zustand eine niedrige Fließgrenze und weisen als ausgehärtete Elastomere eine hohe mechanische Festigkeit auf.

Siliconpolymer-Feststoff-Mischungen, die aus flüssigen Polysiloxanen und festen Füllstoffen bestehen, sind bekannnt. Die unvernetzten Mischungen können durch Zugabe von Vernetzungsmitteln in den gummielastischen Zustand überführt werden. Die Vernetzungsreaktionen können bei Raumtemperatur oder bei erhöhten Temperaturen durchgeführt und durch Katalysatoren beschleunigt werden. In Abhängigkeit von der jeweiligen Vernetzungsart und der beabsichtigten Anwendung können 1 - oder 2-Komponenten-Systeme hergestellt werden die durch Polyadditions-, Polykondensations- oder Radikalreaktionen vernetzen.

Zur Herstellung der Mischungen wird häufig die sogenannte Masterbatchmethode, auch als Anreibverfahren bezeichnet, genutzt, um den Füllstoff in einer Teilmenge Polyorganosiloxan optimal zu dispergieren. Die so hergestellte hochviskose, teilweise plastische Vormischung wird mit weiterem Polyorganosiloxan soweit verdünnt, daß eine leicht verarbeitbare Mischung entsteht (s. Masterbatchverfahren, Degussa "Schriftreihe Pigmente" Nummer 63, 1995).

Die ausgehärteten Siliconelastomere müssen für viele Anwendungen eine hohe mechanische Festigkeit aufweisen, wobei das Niveau der Festigkeit beurteilt werden kann wenn die typischen Kennwerte wie Zugfestigkeit, Weiterreißwiderstand oder Reißdehnung ermittelt werden.

Die Elastomerfestigkeiten können in gewissen Grenzen durch eine gezielte Auswahl der eingesetzten Polysiloxanflüssigkeiten, z. B. hinsichtlich ihrer Viskosität oder ihres Gehaltes an reaktiven Gruppen, und durch Auswahl entsprechender Vernetzungsmittel, z. B. hinsichtlich ihrer Funktionalität, beeinflußt werden. Hauptsächlich werden die Festigkeiten jedoch durch Art und Menge der verwendeten Füllstoffe bestimmt (Noll, Chemie und Technologie der Silicone, Verlag Chemie GmbH Weinheim/Bergstr., 1968, S. 334).

Zur Einstellung von hohen Elastomerfestigkeiten sind hochdisperse Kieselsäuren mit Oberflächen von mehr als 150 m²/g geeignet, die durch Hydrolyse in einer Knallgasflamme gewonnen werden. Diese Kieselsäuren und ihr Einsatz in der Kunststoffindustrie sind ausführlich in Prospekten der Hersteller beschrieben (z. B. Synthetische Kieselsäuren für Dichtstoffe, Degussa AG, Frankfurt, 1995). Neben den hohen spezifischen Oberflächen sind für diese pyrogenen Kieselsäuren die hohen Reinheiten und die außergewöhnlich geringen Stampfdichten charakteristisch.

Besonders hohe Festigkeiten werden erreicht, wenn in den ausgehärteten Siliconelastomeren mindestens 20 Gew.-% einer solchen hochdispersen Kieselsäure enthalten sind enthalten (Ullmann's Encyclopedia of Chemistry, Fifth Edition, VCH Verlagsgesellschaft, Weinheim, Volumne A 24, Seite 70). Dann sind beispielsweise auch Weiterreißwiderstände nach ASTM 624 Die B größer als 20 N/mm erreichbar.

Bei RTV1- Massen (bei Raumtemperatur vernetzende 1-Komponenten-Systeme), LSR-Systemen (Liquid Silicon Rubber = Flüssigsiliconkautschuk) oder HTV-Compounds (Hochtemperaturvernetzender Siliconkautschuk) werden die unvernetzten Siliconpolymer-Feststoff-Mischungen pneumatisch oder hydraulisch aus Behältern ausgepreßt oder mit anderen Fördereinrichtungen transportiert, vermischt und dosiert. Die Verarbeitung großer Produktmengen je Zeiteinheit erfordert bei diesen Anwendungen, daß die Massen hohe Auspreßraten aufweisen sollen. Aus physikalischer Sicht bedeutet die Forderung nach hohen Auspreßraten, daß die Massen unter den Verarbeitungsbedingungen, das heißt, bei der Einwirkung hoher Scherkräfte, niedrige Viskositäten aufweisen müssen. Trotz des Einsatzes von oberflächenbehandelten Kieselsäuren bzw. deren Behandlung in situ nach bekannten Verfahren werden durch die hochdispersen Kieselsäuren die Viskositäten der unvernetzten Ausgangsmischungen sehr stark erhöht. Damit sind der Verbesserung der Gummifestigkeit durch Erhöhung des Kieselsäureanteils in Siliconkautschukmischungen Grenzen gesetzt, denn Mischungen mit zu hohem Kieselsäuregehalt können wegen zu hoher Mischungsviskositäten nicht mehr verarbeitet werden. Bei Verwendung verdichteter Kieselsäure nimmt beispielsweise die Auspreßrate für die angeführten RTV1 -, LSR- und HTV-Kautschuktypen mit steigender Stampfdichte zu (s. Optimierte Produkteigenschaften durch ein verbessertes Verdichtungsverfahren, Technische Information TI 1151, Degussa AG, Frankfurt, 1995).

Auch fließfähige RTV2-Abformmaterialien (bei Raumtemperatur vernetzende 2-Komponenten-Systeme) müssen nach der Aushärtung mechanisch sehr belastbar sein, um möglichst viele Abformungen durchführen zu können. Insbesondere hier wirkt ein hoher Gehalt an hochdisperser Kieselsäure in der Siliconkautschukmischung der gewänschten leichten Verarbeitbarkeit des unvernetzten Materials entgegen. RTV2-Abformmaterialien werden erhalten, wenn die drei Grundbestandteile der Rezeptur (Siliconpolymer mit vernetzungsfähigen Gruppen, Vernetzungsmittel und Katalysator) so auf zwei Komponenten aufgeteilt werden, daß lagerstabile Systeme entstehen. Je nach Vernetzungsart kann dabei der Katalysator mit dem Polymeren oder mit dem Vernetzungsmittel kombiniert werden. Üblicherweise wird so verfahren, daß eine Grundmasse aus vernetzbarem Siliconpolymer und hochdisperser Kieselsäure hergestellt wird und die zweite Komponente das Vernetzungsmittel enthält.

Im Unterschied zu den oben genannten Siliconkautschukmischungen, die bei der Verarbeitung hohe Auspreßraten und damit niedrige Viskositäten bei hohen Schergefällen aufweisen sollen, müssen RTV2-Abformmaterialien bei der Anwendung ohne Einwirkung von starken Scherkräften frei fließen. Es ist aus anwendungstechnischer Sicht daher nicht richtig, Siliconkautschukmischungen auf ihre Eignung als fließfähige Abformmassen danach zu beurteilen, wie niedrig oder wie hoch ihre Viskosität ist. Denn schon bei der Viskositätsmessung selbst (z.B. beim Arbeiten mit dem Rotationsviskosimeter) kommt es zur Einwirkung von Scherkräften auf die kieselsäurehaltige Siliconkautschukmischung. Dadurch werden die realen Verhältnisse des freien Fließens nicht genügend widergespiegelt.

Die Fähigkeit von Siliconkautschukmischungen, frei zu fließen, läßt sich jedoch sehr gut mit dem meßtechnisch erfaßbaren Kennwert der Fließgrenze beschreiben. Die Fließgrenze ist die Mindestschubspannung, die aufgewendet werden muß, damit ein Stoff fließt (RÖMPP Chemie Lexikon, 9. Auflage 1990, Thieme Verlag, Stuttgart, Band 2, Seite 1383). Mischungen mit hoher Fließgrenze weisen eine schlechte Fließfähigkeit aufund Mischungen mit niedriger Fließgrenze eine gute Fließfähigkeit. Die Größe der Fließgrenze ist dabei unabhängig von der jeweiligen Viskosität bei verschiedenen Schergefällen. Es ist beispielsweise möglich, daß eine Mischungen mit relativ hoher Viskosität wesentlich besser fließt, wenn sie eine niedrige Fließgrenze aufweist, als eine Vergleichsmischung mit niedriger Viskosität, die gleichzeitig aber eine wesentlich höherer Fließgrenze aufweist.

Es sind keine Verfahren zur Herstellung von Siliconpolymer-Feststoff-Mischungen für fließfähige RTV2-Silicon-Massen mit niedriger Fließgrenze bekannt.

Der Erfindung lag die Aufgabe zugrunde, ein Verfahren zur Herstellung von Siliconpolymer-Feststoff-Mischungen für fließfähige RTV2-Silicon-Massen mit niedriger Fließgrenze bereitzustellen, welches sowohl sehr gute Verarbeitungseigenschaften der unvernetzten Mischungen als auch hohe mechanische Stabilitäten des ausgehärteten Siliconkautschuk-Elastomeren gewährleisten.

Gegenstand der Erfindung ist ein Verfahren zur Herstellung von Siliconpolymer-Feststoff-Mischungen für fließfähige RTV2-Silicon-Massen mit niedriger Fließgrenze, bei welchem die Siliconpolymer-Feststoff-Mischung erhalten wird durch Vermischen und Homogenisieren von
(a) 100 Gew.-Teilen mindestens eines flüssigen linearen und/oder verzweigten Polyorganosiloxanes mit einer Viskosität von 0,01 bis 1.000 Pas,
(b) 20 bis 500 Gew.-Teilen einer Kieselsäure, die im Moment des Einmischens eine Stampfdichte größer 75 g/l aufweist,
(c) 0,1 bis 500 Gew.-Teilen mindestens einer in Bezug auf die eingesetzte Kieselsäure reaktiven siliciumorganischen Verbindung und
(d) bis zu 100 Gew.-Teilen Wasser.

Als Polyorganosilaxan (a) können alle für die Herstellung von Silicon-Massen bekannten Verbindungen, wie lineare und/oder verzweigte flüssige Siloxane, mit oder ohne vernetzungsfähige Gruppen, eingesetzt werden.
So ist es möglich, vernetzungsfähige Gruppen aufweisende Polyorganosiloxane und/oder keine vernetzungsfähige Gruppen aufweisende Polyorganosiloxane zu verwenden. Beispiele für vernetzungsfähige Gruppen sind siliciumgebundene Hydroxy-, Alkoxy- und/oder Vinylgruppen und/oder Wasserstoff. Bevorzugt werden Polyorganosiloxane mit OH-Gruppen für durch Kondesationsreaktion vernetzende Systeme und Siloxane mit Vinylgruppen für durch Additionsreaktion vernetzende Systeme eingesetzt. Als nicht vernetzend wirkende Gruppen können Alkylreste mit 1 bis 18 Kohlenstoffatomen, insbesondere Methyl- oder Ethylreste oder auch Phenylreste gebunden sein. Als verzweigte Polyorganosiloxane können flüssige Verbindungen eingesetzt werden, die neben mono- und/oder difunktionellen Silicium-Einheiten auch tri- und/oder tetrafunktionelle Einheiten aufweisen. Gemische verschiedener Polyorganosiloxane können ebenfalls eingesetzt werden.

Die Verwendung von Polyorganosiloxanen, welche ganz oder teilweise aus mono(M)- und tetra(Q)funktionellen Einheiten bestehen und vernetzungsfähige oder keine verneztungsfähige Gruppen aufweisen, ist ebenfalls möglich. Insbesondere für die Erniedrigung der Fließgrenze ist die Verwendung dieser sogenannten MQ-Harze vorteilhaft, die beispielsweise fluorhaltige Gruppen aufweisen können. Das Verhältnis der verschiedenen Funktionalitäten wird dabei so gewählt, daß das Polymer bei Raumtemperatur flüssig ist.

Als Kieselsäuren (b) können die seit vielen Jahren handelsüblichen, hochdispersen pyrogenen Kieselsäuren verwendet werden. Diese Kieselsäuren weisen eine extrem niedrige Stampfdichte von ca. 40 g/l, unabhängig von ihrer spezifisch eingestellten BET-Oberfläche, auf, die im Bereich von 90 bis 400 m²/g liegt. Im erfindungsgemäßen Verfahren werden vorzugsweise Kieselsäuren mit einer Oberfläche größer 150 m²/g, insbesondere 200 bis 300 m²/g verwendet. Die durch Flammenhydrolyse hergestellten Kieselsäuren weisen an ihrer Oberfläche siliciumgebundene OH-Gruppen auf, die während einer chemischen Nachbehandlung mit siliciumorganischen Verbindungen reagieren können, wodurch hydrophobe Kieselsäuren erhalten werden. Die Verwendung von unverdichteten Kieselsäuren ist dann bevorzugt, wenn eine Verdichtung im Mischraum, beispielsweise in einem Mischaggregat mit veränderbarem Volumen und, besonders bevorzugt, zusätzlich mit totraumfreiem Mischraum, vor oder während der Einarbeitung der Kieselsäure in das Polyorganosiloxan (a) durch Zusammenpressen des Schüttvolumens aufdie geforderte Stampfdichte erfolgen kann.

Es ist weiterhin möglich, als Kieselsäure (b) eine handelsübliche verdichtete Kieselsäure mit einer Stampfdichte von größer 75 g/l, bevorzugt mit einer Stampfdichte von größer 100 g/l zu verwenden und diese, beispielsweise in einem Zweiwellenkneter, in das Polyorganosiloxan einzuarbeiten.

Der Anteil an Kieselsäure in der Gesamt-RTV2-Silicon-Masse beträgt mindestens 20 Gew.-%, bezogen auf das eingesetzte Polyorganosiloxan. Gehalte zwischen 20 und 30 Gew.-% sind bevorzugt, da bei einem Anteil von weniger als 20 Gew.-% die mechanische Festigkeit des Elastomeren oft zu gering ist und bei einem Anteil oberhalb 30 Gew.-% die Fließfähigkeit der Mischung nicht immer gewährleistet werden kann.

Die verwendete Kieselsäure kann chemisch vorbehandelt sein und beispielsweise mit einer vorhydrophobierten Oberfläche eingesetzt werden. Die vollständige Hydrophobierung erfolgt in-situ mittels mindestens einer reaktiven siliciumorganischen Verbindung (c). Dabei sind alle dafür bekannten Verbindungen verwendbar, üblicherweise werden niedermolekulare siliciumorgansche Verbindungen mit OH-Gruppen oder hydrolysierbaren Resten, wie OR- oder NHR-Gruppen, eingesetzt, beispielsweise Hexaalkyldisilazane, Trialkylsilanole und/oder kurzkettige Siloxanole. Diesen Behandlungsmitteln können bis zu 100 Gew.-Teilen Wasser zugesetzt werden. Für die Hydrophobierung sind Temperaturen im Bereich von 60 bis 280 °C üblich, bevorzugt wird bei 100 bis 160 °C gearbeitet. Bei allen Verfahrensstufen kann dabei bei Normaldruck, Unterdruck oder auch bei Überdruck gearbeitet werden. Die flüchtigen Bestandteile bzw. Reaktionsprodukte werden anschließend, bevorzugt im Vakuum und bei höheren Temperaturen, entfernt.

Weiterhin können unter den Bedingungen des Verfahrens in Bezug auf die Kieselsäureoberfläche nicht reaktive, niedermolekulare siliziumorganische Verbindungen wie beispielsweise Hexaalkyldisiloxan zugesetzt werden. Die Gegenwart dieser Verbindungen erleichtert das Einmischen der Kieselsäure in die Mischung und bewirkt nach der Abtrennung eine effiziente Verteilung der Kieselsäure in der Mischung.

Vor, während oder nach der Kieselsäureeinarbeitung können beliebige weitere, für den jeweiligen Anwendungszweck spezifischer Additive zugesetzt werden. Dazu gehören beispielsweise Pigmente, wenig oder nicht verstärkende Füllstoffe oder auch Weichinacher und Stabilisatoren.

Das erfindungsgemäße Verfahren zur Herstellung der Siliconpolymer-Feststoff-Mischungen mit niedriger Fließgrenze erfolgt durch Vermischen und Homogenisieren der einzelnen Mischungsbestandteile. Dieses kann in einem oder in verschiedenen Mischaggregaten erfolgen. Bevorzugt ist das Homogenisieren in einem Mischaggregat mit veränderbarem Volumen, beispielsweise einem Stempelkneter oder in einem Mischaggregat mit totraumfreiem Mischraum, beispielsweise einem Preßmixer.

Eine vorteilhafte Ausführungsform zur Herstellung der erfindungsgemäßen Siliconpolymer-Feststoff-Mischungen ist das sogenannte Anreib- oder Masterbatchverfahren. Dabei wird das Polyorganosiloxan vorgelegt, dann das Behandlungsmittel für die in-situ-Hydrophobierung der Kieselsäure zugegeben, anschließend die Kieselsäure sowie gewünschte andere Bestandteile eingemischt und abschließend die Mischung mit dem Ziel der gleichmäßigen Verteilung homogenisiert. Dabei ist es möglich, entweder sofort verdichtete Kieselsäure einzusetzen oder die Verdichtung von unverdichteter Kieselsäure auch an Ort und Stelle vorzunehmen.

Nach dem Homogenisieren kann rezepturgemäß weiteres Organopolysiloxan, welches vernetzungsfähigen Gruppen und/oder keine vernetzungsfähige Gruppen aufweist, zugegeben werden, um die für die weitere Verarbeitung notwendige Fließfähigkeit und Reaktivität der Mischung einzustellen.

Zwingend für die spätere Verwendbarkeit der Mischung ist, daß Polyorganosiloxane mit vernetzungsfähigen Gruppen enthalten sind, diese können entweder bei der Einarbeitung der Kieselsäure und/oder bei der Einstellung der fließfähigen Mischung zugesetzt werden. Als Mischaggregate zur Einarbeitung von weiterem Polyorganosiloxan sind die gleichen, die auch für das Vermischen und Homogenisieren verwendet werden können, geeignet, wie verschiedenartig konstruierte Dissolver mit Planetenrührwerken oder Zweiwellenkneter.

Völlig überraschend wurde gefunden, daß mit dem erfindungsgemäßen Verfahren Siliconpolymer-Feststoff-Mischungen herstellbar sind, die im unvernetzten Zustand eine niedrige Fließgrenze aufweisen und nach der Vernetzung gummielastische Materialien mit sehr hoher mechahischer Festigkeit ergeben.

### Ausführungsbeispiele

### Allgemeine Versuchsbeschreibung

Die Herstellung der Mischungen erfolgte in einem Zweiwellen-Kneter (Fassungsvermögen 0,5 l) bzw. in einem Preßmixer (Fassungsvermögen 20 l).

Polyorganosiloxan (a) wurde vorgelegt. Dann erfolgte die Zugabe von in Bezug auf die eingesetzte Kieselsäure reaktiver siliciumorganischer Verbindung und Wasser. In dieses Gemisch wurde die Kieselsäure (b) eingearbeitet. Dann wurde auf 100 bis 130 °C aufgeheizt und anschließend die Mischung im Membranvakuum 30 Minuten bei 130 bis 160 °C entflüchtigt. Zur Einstellung der gewünschten Fließfähigkeit wurde weiteres Polyorganosiloxan zugegeben.

Als Polyorganosiloxan (a) wurden eingesetzt:
A Polydimethylsiloxan mit Vinyl-Endgruppen und einer Viskosität von 1.000 mPas
B Polydimethylsiloxan mit Vinyl-Endgruppen und einer Viskosität von 10.000 mPas
C Polydimethylsiloxan mit OH-Endgruppen und einer Viskosität von 3.000 mPas
D Polydimethylsiloxan mit Trimethylsilyl-Endgruppen und einer Viskosität von 100 das
E Mischung aus 50 Gew.-% Polysiloxan der Zusammensetzung M_{0,9}M^{V}_{0,1}T^{F}_{0,01}Q mit einem Molgewicht von 1.300 g, wobei V = Vinyl und F = Tridekafluorocryl bedeutet, und 50 Gew.-% Polydimethylsiloxan B

Als, in Bezug auf die eingesetzte Kieselsäure reaktive siliciumorganische Verbindungen (c) wurden eingesetzt:
F Hexamethyldisilazan
G Divinyltetramethyldisilazan

Folgende Kieselsäuren (b) wurden eingesetzt:
H unbehandelte, pyrogene Kieselsäure mit einer BET-Oberfläche von 300 m²/g und einer Stampfdichte von 50 g/l
I unbehandelte, pyrogene Kieselsäure mit einer BET-Oberfläche von 300 m²/g und einer Stampfdichte von 100 g/l

### Beispiele 1 bis 4 / Vergleichbeispiel 5

Eingesetzte Verbindungen, deren Mengen als Angabe in Gew.-Teilen sowie die Ergebnisse sind in Tabelle 1 zusammengestellt.

**Tabelle 1**

| Eingesetzte Verbindungen | Beispiel 1 | Beispiel 2 | Beispiel 3 | Beispiel 4 | Vergleichsbeispiel 5 |
|---|---|---|---|---|---|
| A | 45 | 45 | --- | --- | 45 |
| B | --- | --- | 35 | 45 | --- |
| E | --- | --- | 10 | --- | --- |
| F | 7,5 | 7,5 | 7,5 | 7,5 | 7,5 |
| G | 0,5 | 0,5 | 0,5 | 0,5 | 0,5 |
| Wasser | 2 | 2 | 2 | 2 | 2 |
| H | --- | --- | --- | 30 | 30 |
| I | 30 | 30 | 30 | --- | --- |
| Verdünnen mit A | 55 | 55 | --- | --- | 55 |
| Verdünnen mit B | --- | --- | 55 | 55 | --- |
| Fließgrenze in Pa | 35 | 32 | 29 | 30 | 55 |
| Beispiel 1: Die Mischungsherstellung erfolgte im Zweiwellen-Kneter. Beispiel 2: Die Mischungsherstellung erfolgte im Preßmixer. Beispiel 3: Die Mischungsherstellung erfolgte im Preßmixer. Beispiel 4: Die Mischungsherstellung erfolgte durch Verdichten der Kieselsäure im Preßmixer. Vergleichsbeispiel 5: Die Mischungsherstellung erfolgte im Zweiwellen-Kneter. | | | | | |

In die gleichen Mischaggregate wurden zum Abschluß 0,1 Gew.-Teile Katalysator mit 1 Gew.-% Platin und 0,2 Gew -Teile cyclisches Methylvinylsiloxan zugegeben. Anschließend wurde die Mischung mit 1,5 Gew.-Teilen eines Hydrogensiloxanes mit 0,7 Gew.-% siliciumgebundenen Wasserstoff innerhalb von 30 Minuten bei 150 °C vernetzt.

### Beispiele 6 bis 9 / Vereleichsbeispiel 10

Eingesetzte Verbindungen, deren Mengen als Angabe in Gew.-Teilen sowie die Ergebnisse sind in Tabelle 2 zusammengestellt.

**Tabelle 2**

| Eingesetzte Verbindungen | Beispiel 6 | Beispiel 7 | Beispiel 8 | Beispiel 9 | Vergleichsbeispiel 10 |
|---|---|---|---|---|---|
| C | 45 | 45 | 35 | 45 | 45 |
| E | --- | --- | 10 | --- | --- |
| F | 7,5 | 7,5 | 7,5 | 7,5 | 7,5 |
| G | 0,5 | 0,5 | 0,5 | 0,5 | 0,5 |
| Wasser | 2 | 2 | 2 | 2 | 2 |
| H | --- | --- | --- | 30 | 30 |
| I | 30 | 30 | 30 | --- | --- |
| Verdünnen mit C | 55 | 55 | 55 | 55 | 55 |
| Fließgrenze in Pa | 4,7 | 5,3 | 4,2 | 4,6 | 9,1 |
| Beispiel 6: Die Mischungsherstellung erfolgte im Zweiwellen-Kneter. Beispiel 7: Die Mischungsherstellung erfolgte im Preßmixer. Beispiel 8: Die Mischungsherstellung erfolgte im Preßmixer. Beispiel 9: Die Mischungsherstellung erfolgte durch Verdichten der Kieselsäure im Preßmixer. Vergleichsbeispiel 10: Die Mischungsherstellung erfolgte im Zweiwellen-Kneter. | | | | | |

Die Mischungen wurden durch Zugabe von 5 Gew.-Teilen eines Vernetzers (Tetraethoxysilan mit 5 Gew.-Teilen Dibuthylzinndilaurat) 7 Tage bei Raumtemperatur vernetzt.

### Ergebnisse

Alle hergestellten Mischungen wiesen niedrige Fließgrenzen und Weiterreißwiderstände (ASTM 624 Die B) oberhalb 20 N/mm auf.

## Patentansprüche

1. Verfahren zur Herstellung von Siliconpolymer-Feststoff-Mischungen für fließfähige RTV2-Silicon-Massen mit niedriger Fließgrenze, dadurch gekennzeichnet, daß die Siliconpolymer-Feststoff-Mischung erhalten wird durch Vermischen und Homogenisieren von
(a) 100 Gew.-Teilen mindestens eines flüssigen linearen und/oder verzweigten Polyorganosiloxanes mit einer Viskosität von 0,01 bis 1.000 Pas,
(b) 20 bis 500 Gew.-Teilen einer Kieselsäure, die im Moment des Einmischens eine Stampfdichte größer 75 g/l aufweist,
(c) 0,1 bis 500 Gew.-Teilen mindestens einer in Bezug auf die eingesetzte Kieselsäure reaktiven siliciumorganischen Verbindung und
(d) bis zu 100 Gew.-Teilen Wasser.

2. Verfahren nach Anspruch 1, dadurch gekennzeichnet, daß als Polyorganosiloxan (a) vernetzungsfähige Gruppen aufweisende und/oder keine vernetzungsfähige Gruppen aufweisende flüssige Polyorganosiloxane eingesetzt werden.

3. Verfahren nach Anspruch 1, dadurch gekennzeichnet, daß das Polyorganosiloxan (a) als vernetzungsfähige Gruppen siliciumgebundene Hydroxy-, Alkoxy- und/oder Vinylgruppen und/oder Wasserstoff aufweist.

4. Verfahren nach Anspruch 1, dadurch gekennzeichnet, daß die Kieselsäure (b) im Moment des Einmischens eine Stampfdichte größer 100 g/l aufweist.

5. Verfahren nach Anspruch 1, dadurch gekennzeichnet, daß als in Bezug auf die Kieselsäure reaktive siliciumorganische Verbindungen (c) Hexaalkyldisilazane, Trialkylsilanole und/oder kurzkettige Siloxanole eingesetzt werden.

6. Verfahren nach Anspruch 1, dadurch gekennzeichnet, daß die Kieselsäure direkt vor dem Einmischen in das Polyorganosiloxan (a) auf eine Stampfdichte größer 75 g/l verdichtet wird.

7. Verfahren nach Anspruch 1, dadurch gekennzeichnet, daß eine verdichtete Kieselsäure mit einer Stampfdichte größer 75 g/l verwendet wird.
